# EUROPÄISCHE PATENTSCHRIFT

(11) **EP 1 568 446 B1**
(45) Veröffentlichungstag und Bekanntmachung des Hinweises auf die Patenterteilung: **12.03.2008**
(21) Anmeldenummer: 05001290.5
(22) Anmeldetag: 22.01.2005
(51) Int. Cl.: B25J 15/04

(54) **Kupplung mit Spannzange für Werkstückgreifer**
Coupling with collet chuck for workpiece gripper
Dispositif d'accouplement avec pince de serrage pour preneur de pièces d'oeuvre

(30) Priorität: 26.02.2004 DE 102004009936
(43) Veröffentlichungstag der Anmeldung: 31.08.2005
(73) Patentinhaber: Bilsing Automation GmbH, 57439 Attendorn (DE)
(72) Erfinder: Bilsing, Alfred, 57439 Attendorn (DE)
(74) Vertreter: Erb, Henning

(56) Entgegenhaltungen:
- EP-A- 0 940 230
- DE-A1- 19 721 824
- US-A- 5 782 571

## Beschreibung

Die vorliegende Erfindung befaßt sich mit einer Kupplung zum Einspannen eines Werkstückgreifers in einer Handhabungseinrichtung, insbesondere bei Transferpressen und Industrierobotern, mit einer der Handhabungseinrichtung zugehörigen rohrähnlichen Spannzange und einem dem Werkstückgreifer zugehörigen, in die Spannzange einführbaren rohrförmigen Anschlußteil, wobei die Spannzange wenigstens einen Längsschnitt und wenigstens eine Schrägfläche an ihrem Außenumfang aufweist, die mit Hilfe einer Stellvorrichtung, die über ein elastisches Zwischenelement auf die Spannzange wirkt, gegen eine zugehörige Gegenschrägfläche in einer zylindrischen Aufnahme der Handhabungseinrichtung axial beweglich ist, wodurch das Anschlußteil in der Spannzange einspannbar ist.

Eine solche Kupplung ist beispielsweise aus der EP 940 230 B1 oder auch der US 4,615,101 bekannt. Dort ist eine motorisch betätigbare Kupplung gezeigt, bei welcher die Spannzange mit Hilfe eines Pneumatikzylinders verstellbar ist. Der Luftdruck muß über die Einspannzeit gehalten werden, um ein Lösen des Anschlußteils zu vermeiden. Auch bei einer anderen Antriebsart bedeutet dies, daß die aufgebrachte Klemmkraft über die Einspannzeit gehalten werden muß, so daß die gezeigte Kupplung für eine bisweilen gewünschte manuelle Betätigung nicht geeignet wäre. Bei einer Transferpresse, die in relativ kurzen Zeitabständen umgerüstet werden muß, ist eine Vielzahl von Kupplungsvorgängen durchzuführen, die unbedingt ein sicheres Halten des Werkstückgreifers an der Handhabungseinrichtung gewährleisten müssen, da es ansonsten zu einer ungenauen Fertigung oder, beispielsweise bei einem Druckabfall in einem Pneumatikzylinder einer Stellvorrichtung, zu einem Lösen des Werkstückgreifers kommen könnte. Dies muß unbedingt vermieden werden.

Die Aufgabe der vorliegenden Erfindung besteht darin, eine Kupplung der eingangs beschriebenen Art zu schaffen, die ein besonders sicheres Einspannen eines Werkstückgreifers in einer Handhabungseinrichtung ermöglicht und sich beispielsweise auch für eine manuelle Betätigung eignet.

Erfindungsgemäß wird die Aufgabe dadurch gelöst, daß bei einer Kupplung der eingangs beschriebenen Art die Stellvorrichtung eine Totpunktmechanik aufweist, die ihren Totpunkt kurz vor dem Erreichen der Endstellung der Stellvorrichtung überschreitet.

Die erfindungsgemäße Kupplung bietet den Vorteil, daß sie eine hohe Sicherheit gegen ein Lösen der Stellvorrichtung bietet, so daß die Einspannstellung mit den Klemmkräften über einen längeren Zeitraum sicher erhalten bleibt, ohne daß fortwährend eine Kraft auf die Stellvorrichtung einwirken muß. Bei einer pneumatischen Betätigung besteht somit eine sehr gute Sicherheit für den Fall eines Druckabfalles in der Pneumatik, und besonders geeignet ist die erfindungsgemäße Lösung auch für eine manuelle Betätigung der Stellvorrichtung, da nach einem einmaligen Aufbringen der Spannkraft auf die Stellvorrichtung die Einspannstellung erhalten bleibt. Ein weiterer Vorteil der Totpunktmechanik besteht darin, daß kurz vor dem Erreichen des Totpunktes ein besonders großes Übersetzungsverhältnis vorliegt, das heißt, einem vergleichsweise großen Stellweg auf der Antriebsseite steht ein sehr kleiner Verstellweg auf der Abtriebsseite gegenüber, so daß das Aufbringen sehr hoher Kräfte auch durch einfache manuelle Betätigung ermöglicht ist.

Von Vorteil bei einer manuellen Betätigung der Stellvorrichtung ist auch, daß das Überschreiten des Totpunktes für den Bediener fühlbar ist, so daß auf diesem Wege dem Bediener das Erreichen der ordnungsgemäß verriegelten Spannstellung signalisiert wird.

Bedingt durch die elastischen Zwischenelemente ist die auf die Spannzange einwirkende Kraft im Augenblick des Überschreitens des Totpunktes am größten. Je nach Auslegung der Klemmflächen mit oder ohne Selbsthemmung in der Spannstellung, verharrt die Spannzange in der im Totpunkt erreichten Stellung oder bewegt sich minimal in Richtung der Lösestellung, bis die Endstellung der Stellvorrichtung erreicht ist. Insbesondere bei festgeklemmter Spannzange sorgt das elastische Zwischenelement dafür, daß in der Stellvorrichtung kein Spiel entsteht.

Grundsätzlich eignet sich für die erfindungsgemäße Kupplung jede geeignete Totpunktmechanik, beispielsweise eine Kniehebelkonstruktion. Besonders bevorzugt ist jedoch eine Totpunktmechanik, die eine Exzenterwelle aufweist, die über das elastische Zwischenelement auf die Spannzange wirkt. Eine Exzenterwelle, beispielsweise auch in der Form einer Kurbelwelle, läßt sich platzsparend in die Handhabungseinrichtung integrieren und setzt eine einfach aufzubringende Drehbewegung in die notwendige lineare Spannbewegung der Spannzange um. Besonders bevorzugt ist eine Exzenterwelle, die eine senkrecht zu der Spannzange liegende Drehachse aufweist, wobei vorzugsweise die Drehachse der Exzenterwelle auch mittig in Bezug auf die Spannzange liegt. Eine solche Anordnung ist besonders platzsparend und wegen der geringen notwendigen Umlenkungen sehr reibungsarm.

Die Kopplung der Exzenterwelle mit der Spannzange kann mit Hilfe eines Pleuelelements erfolgen, das auf ein in der Handhabungseinrichtung hin und her beweglich gelagertes Element wirkt, wobei letzteres über eine Druckfeder auf die Spannzange oder ein weiteres zwischengeschaltetes Element in Form eines Schiebeelements wirkt, das in Axialrichtung mit der Spannzange gekoppelt ist. Die einzelnen Teile können jeweils hohl und axial ineinandergeschoben angeordnet sein, um die Baulänge der der Kupplung zugehörigen Teile in der Handhabungseinrichtung zu minimieren. Um hohe Spannkräfte bei geringem Federweg aufbauen zu können, ist der Einsatz von Tellerfedern bevorzugt, die beispielsweise um das hin und her bewegliche Element zwischen einer Druckmutter und einem radial nach innen weisenden Vorsprung des Schiebeelements angeordnet sein können.

Zum Lösen der Spannzange wird die Stellvorrichtung in der entgegengesetzten Richtung wiederum über den Totpunkt bewegt, wobei in diesem Fall das hin und her bewegliche Element einen Mitnehmerabsatz oder Randvorsprung aufweist, der das Schiebeelement vorzugsweise unter Umgehung der elastischen Elemente in einer die Spannzange freigebende Position mitnimmt.

Nachfolgend wird anhand der beigefügten Zeichnungen näher auf ein Ausführungsbeispiel der Erfindung eingegangen. Es zeigen:
- Fig. 1: einen Längsschnitt durch einen Kupplungsbereich einer Handhabungseinrichtung;
- Fig. 2: einen um 90° gedrehten Längsschnitt des Kupplungsbereiches gemäß Fig. 1.

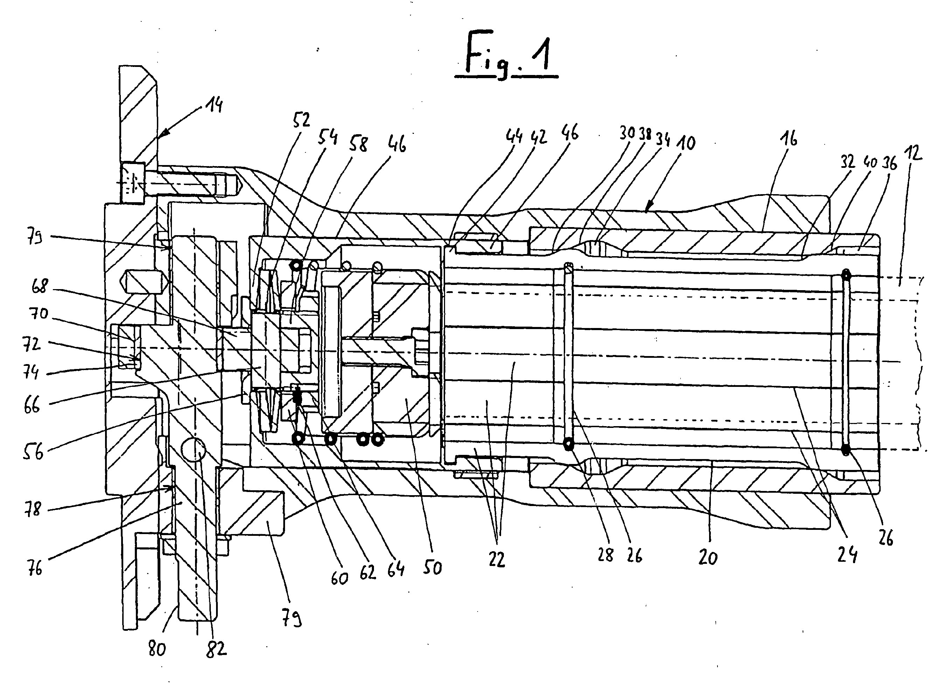

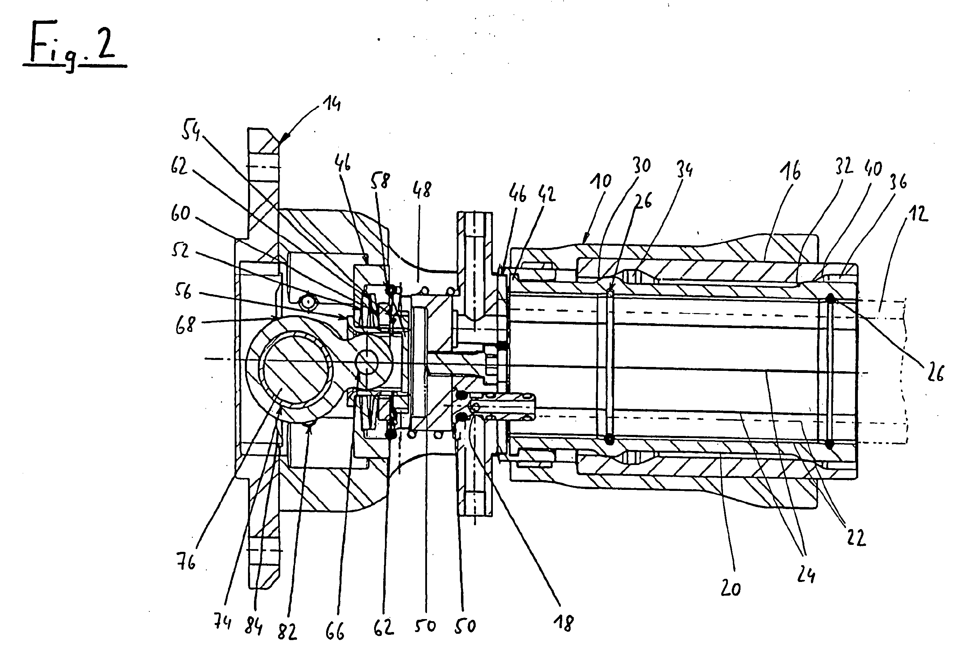

In Fig. 1 ist ein Längsschnitt einer Kupplung 10 zum Einspannen eines Werkstückgreifers gezeigt, von welchem lediglich ein rohrförmiges Anschlußteil 12 in gestrichelten Linien angedeutet ist. Der Werkstückgreifer ist dem handzuhabenden Werkstück individuell angepaßt und kann die Form eines beispielsweise 2 Meter langen Auslegerbaums mit Auslegerästen haben, an welchen Saug- und/oder Klammergreifer angebracht sind. Bei Pneumatikgreifern können in dem Anschlußteil 12 Pneumatikleitungen (nicht gezeigt) vorgesehen sein, die an entsprechende Anschlüsse 18 (siehe Fig. 2) der Handhabungseinrichtung 14 anschließbar sind.

Der rohrförmige Anschlußteil 12 ist in eine ihn umschließende Spannzange 20 einführbar, die aus einer Mehrzahl von über den Umfang verteilten Ringsegmenten 22 mit zwischenliegenden Schlitzen 24 gebildet ist. Um bei herausgenommenem Anschlußteil ein Herausfallen der einzelnen Ringsegmente 22 zu verhindern, sind innenseitig Stützringe 26 vorgesehen, die beispielsweise in der Form eines Axialsicherungsringes in Nuten 28 in den Ringsegmenten 22 eingreifen und diese in Radialrichtung stabilisieren. Grundsätzlich ist anstelle einer aus Ringsegmenten aufgebauten Spannzange auch eine hülsenförmige Spannzange denkbar, die mit Schlitzen lediglich über einen Teil ihrer Länge versehen ist oder einen einzigen Längsschlitz aufweist, um in Radialrichtung elastisch deformierbar zu sein.

Die Spannzange 20 verfügt an ihrem Außenumfang über zwei mit Abstand zueinander angeordnete Schrägflächen 30, 32, die eine konische Form besitzen und in entsprechend geformte Ausnehmungen 34, 36 mit den Schrägflächen 30, 32 angepaßten Gegenschrägflächen 38, 40 im radial erweiterten Zustand einrückbar sind.

An ihrem der Handhabungseinrichtung 14 zugewandten Ende ist an der Spannzange 20 beziehungsweise ihren Ringsegmenten 22 ein Radialvorsprung 42 vorgesehen, der in eine Nut 44 im Innenumfang eines Schiebeelements 46 eingreift, das in dem hohlzylindrischen Aufnahmebereich hin- und herbeweglich geführt ist. Das Schiebeelement 46 besitzt Längsöffnungen 48 (siehe Fig. 2) durch welche eine Anschlußeinheit 50 für die Pneumatikanschlüsse 18 ragt, die ortsfest mit Bezug auf die Handhabungseinrichtung 14 positioniert ist und auch einen Axialanschlag für das Anschlußteil 12 bildet.

An seinem der Spannzange 20 abgewandten Ende besitzt das Schiebeelement 46 einen nach innen weisenden Ringvorsprung 52, der zwischen einem Tellerfederpaket 54 und einem nach außen umgebogenen Ringvorsprung 56 eines topfähnlichen, hin und her beweglichen Elements 58 aufgenommen ist. Die Tellerfeder ist auf der dem Ringvorsprung 52 abgewandten Seite an einer Druckmutter 60 abgestützt, die mit Hilfe eines Sicherungsrings 62 und einer Kontermutter 64 axial unverschieblich auf dem topfähnlichen Element 58 gehalten ist.

Durch das Topfelement 58 verläuft ein in dessen Wandung festgelegter Querbolzen 66, der durch das Auge eines Pleuelelements 68 verläuft, dessen Kurbelöffnung 70 auf einem Exzenterelement 72 mit Hilfe einer Gleitbuchse 74 schwenkbar gelagert ist. Das Exzenterelement 72 ist Teil einer Exzenterwelle 76, die mit Hilfe von Gleitlagern 78 in Lagerböcken 79 der Kupplung 10 drehbar gelagert ist. An dem aus der Kupplung 10 hervorstehenden Ende 80 der Exzenterwelle 76 ist ein Mehrkantansatz oder dergleichen ausgebildet, um eine Kurbel oder einfach einen Schwenkhebel an der Exzenterwelle 76 ansetzen zu können. Ein Vorsprung 82 an der Exzenterwelle wirkt mit einem Anschlag 84 am Gehäuse der Kupplung 10 in der gespannten Endstellung der Spannzange 20 zusammen und begrenzt den Drehwinkel der Exzenterwelle 76.

Fig. 1 und 2 zeigen die Kupplung in der Einspannstellung mit radial nach innen zusammengezogener Spannzange, in welcher der Anschlußteil 12 fest verklemmt ist, so daß die im Betrieb auftretenden Zugkräfte, Biege- und Torsionsmomente sicher aufgenommen werden können. Eventuell vorhandene pneumatische oder elektrische Anschlüsse sind mit dem Anschlußelement 50 verbunden, wobei der Vorsprung 82 noch nicht seinen Anschlag erreicht hat.

Ausgehend von einer entspannten Stellung, wird zunächst ein zu befestigendes Anschlußteil 12 in den Hohlzylindrischen Aufnahmebereich 16 der Kupplung 10 eingeführt. In dieser Stellung befindet sich das Exzenterelement 72 in einer der Aufnahmeöffnung zugewandten Stellung und die Spannzange befindet sich in der radial erweiterten Stellung, wobei sie auch axial im Sinne der Darstellung nach rechts verlagert ist, so daß die Vorsprünge der Ringsegmente 22 der Spannzange 20 mit ihren Schrägflächen 30, 32 in die Ausnehmungen 34, 36 des Aufnahmebereichs 16 eingerückt sind. Entsprechend der Lage des Exzenterelements ist auch die Lage der mit dem Schiebeelement 46 gekoppelten Spannzange 20 definiert.

Nach dem Einfügen des Anschlußteiles 12 wird nunmehr die Exzenterwelle 76 in Richtung der Spannstellung verdreht. Dadurch bewegt sich die Mitte des Exzenterelements 72 weg von dem hohlzylindrischen Aufnahmebereich 16, wodurch auch das Pleuelelement 68 und damit das Topfelement 58 entsprechend verlagert werden. Das Topfelement 58 wirkt über die Druckmutter 60 und das Tellerfederpaket 54 auf den Radialvorsprung 52 des Schiebeelements 46 und verlagert dieses unter Mitnahme der Ringsegmente 22 der Spannzange 20. Bedingt durch die Schrägflächen 30, 32, die an den Gegenschrägflächen 38, 40 abgleiten, zieht sich die Spannzange 20 zusammen und verklemmt das Anschlußteil 12 im Aufnahmebereich 16. Die Schrägflächen 30, 32, 38, 40 können so beschaffen sein, daß zu Beginn des Spannvorganges mit einer relativ großen Steigung ein zunächst schnelleres Zusammenziehen erreicht wird, während gegen Ende des Spannvorganges durch eine abnehmende Steigung eine besonders hohe Klemmkraft erreichbar ist.

Mit zunehmender Spannkraft wird das Tellerfederpaket 54 zusammengedrückt, so daß sich der Ringvorsprung 52 von dem Rand des Topfelements 58 abhebt. Die maximale Zugkraft auf die Ringsegmente 22 der Spannzange 20 wird ausgeübt, wenn sich das Exzenterelement 72 in seinem vom Aufnahmebereich 16 entfernt liegenden Totpunkt befindet. In diesem Punkt hat der Vorsprung 82 den Anschlag 84 noch nicht ganz erreicht, so daß es bei einem Weiterdrehen zum Anschlag 84 zu einem geringfügigen, für den Bediener aber am Hebel der Exzenterwelle 76 gut fühlbaren Abfall der Stellkräfte kommt. Die in dieser Stellung bereits verklemmte Spannzange 20 verharrt dabei nach dem Überschreiten des Totpunktes in ihrer Axialstellung und das sich geringfügig wieder in Richtung des Aufnahmebereiches bewegende Topfelement 58 verlagert sich unter leichtem Ausfedern des Tellerfederpaketes 54 relativ zu dem ebenfalls stillstehenden Schiebelement 46.

Mit dieser Totpunktmechanik, die beispielsweise auch durch ein Kniegelenk darstellbar wäre, wird eine besonders hohe Sicherheit der Kupplung 10 gegen Lösen erreicht und der Bediener weiß durch die fühlbare Totpunktüberschreitung, daß er die gesicherte Spannstellung erreicht hat. Selbstverständlich könnte auch ein elektrischer oder pneumatischer Antrieb für die Exzenterwelle 76 vorgesehen sein.

Zum Lösen des Anschlußteils 12 wird die Exzenterwelle 76 in entgegengesetzter Richtung gedreht, wobei nach Überschreitung des Totpunktes zunächst die Tellerfedern 54 entlastet werden, bis sich der Randvorsprung 56 des Topfelements 58 an dem Ringvorsprung 52 des Schiebeelements 46 anlegt und dieses nachfolgend unmittelbar mitnimmt, so daß die Spannzange 20 wieder in ihre radial erweiterte Ruhestellung gelangt. Anschließend kann das Anschlußteil 12 entfernt und ein anderes Anschlußteil in die Kupplung 10 eingesteckt werden.

## Patentansprüche

1. Kupplung zum Einspannen eines Werkstückgreifers in einer Handhabungseinrichtung (14) insbesondere bei Transferpressen, mit einer der Handhabungseinrichtung (14) zugehörigen, röhrenähnlichen Spannzange (20) und einem dem Werkstückgreifer zugehörigen, in die Spannzange (20) einsteckbaren, rohrförmigen Anschlußteil (12), wobei die Spannzange (20) wenigstens einen Längsschlitz (24) und wenigstens eine Schrägfläche (30, 32) an ihrem Außenumfang aufweist, die mit Hilfe einer Stellvorrichtung (46, 58, 66, 68, 74, 76), die über ein elastisches Zwischenelement (54) auf die Spannzange (20) wirkt, gegen wenigstens eine zugeordnete Gegenschrägfläche (38) in einer zylindrischen Aufnahme (16) der Handhabungseinrichtung (14) axial beweglich ist, wodurch das Anschlußteil (12) in der Spannzange (20) einspannbar ist, **dadurch gekennzeichnet, daß** die Stellvorrichtung (76, 74, 68, 66, 58, 46) eine Totpunktmechanik (74, 68, 66, 58) aufweist, die ihren Totpunkt kurz vor dem Erreichen der Endstellung der Stellvorrichtung überschreitet.

2. Kupplung nach Anspruch 1, **dadurch gekennzeichnet, daß** die Totpunktmechanik eine Kniehebelkonstruktion oder Exzenterwelle (76, 74) aufweist, die über ein elastisches Zwischenelement (54) auf die Spannzange (20) wirkt.

3. Kupplung nach Anspruch 2, **dadurch gekennzeichnet, daß** die Exzenterwelle (76, 74) eine senkrecht zu der Spannzange (20) liegende Drehachse aufweist, die vorzugsweise mittig in Bezug auf die Spannzange (20) angeordnet ist.

4. Kupplung nach Anspruch 2 oder 3, **dadurch gekennzeichnet, daß** die Exzenterwelle (76) mit einem exzentrischen Kurbelzapfen (72) als Exzenterelement ausgebildet ist, auf welchem ein Pleuelelement (68) schwenkbar gelagert ist, das mit der Spannzange (20) gekoppelt ist und vorzugsweise über einen Querbolzen (66) auf ein hin und her bewegliches, topfförmiges Element (58) wirkt.

5. Kupplung nach Anspruch 4, **dadurch gekennzeichnet, daß** das topfförmige Element (58) über eine Druckfeder (54), die beispielsweise aus einer oder mehreren Tellerfedern (54) besteht, auf ein Schiebeelement (46) wirkt, das in Axialrichtung mit der Spannzange (20) gekoppelt ist.

6. Kupplung nach Anspruch 5, **dadurch gekennzeichnet, daß** das topfförmige Element (58) ein Außengewinde aufweist, auf welchem eine Druckmutter (60) aufgeschraubt ist, die über die Druckfeder (54) in der Spannrichtung auf das Schiebeelement (46, 52) wirkt.

7. Kupplung nach Anspruch 5 oder 6, **dadurch gekennzeichnet, daß** das topfförmige Element (58) einen Mitnehmerabsatz (56) oder Randvorsprung aufweist, der das Schiebeelement (46) in einer die Spannung lösenden Richtung mitnimmt.

8. Kupplung nach einem der Ansprüche 2 bis 7, **dadurch gekennzeichnet, daß** ein Anschlag (82, 84) vorgesehen ist, der den Drehwinkel der Exzenterwelle (76) nach dem Überschreiten des Totpunktes begrenzt.

9. Kupplung nach einem der vorhergehenden Ansprüche, **dadurch gekennzeichnet, daß** die Stellvorrichtung manuell betätigbar ist, insbesondere mit Hilfe einer auf die Exzenterwelle (76) aufsteckbaren Kurbel.

10. Kupplung nach einem der vorhergehenden Ansprüche, **dadurch gekennzeichnet, daß** die Spannzange (20) in der Einspannstellung selbsthemmend verklemmt ist.

## Claims

1. A coupling for clamping a workpiece gripper in a handling device (14), particularly in transfer presses, with a tubelike collet chuck (20) associated with the handling device (14) and with a tubular connecting part (12) which is associated with the workpiece gripper and can be inserted into the collet chuck (20), wherein the collet chuck (20) has at least one longitudinal slot (24) and on its outer circumference at least one inclined surface (30,32) which by means of a control device (46,58,66,68,74,76), which acts via an elastic intermediate element (54) on the collet chuck (20), is axially movable against at least one associated inclined mating surface (38) in a cylindrical socket (16) of the handling device (14), whereby the connecting part (12) can be clamped in the collet chuck (20), **characterised in that** the control device (76,74,68,66,58,46) has a dead-centre mechanism (74,68,66,58) which exceeds its dead centre shortly before reaching the end position of the control device.

2. A coupling according to Claim 1, **characterised in that** the dead-centre mechanism has a toggle structure or eccentric shaft (76,74) which acts on the collet chuck (20) via an elastic intermediate element (54).

3. A coupling according to Claim 2, **characterised in that** the eccentric shaft (76,74) has an axis of rotation which is situated perpendicular to the collet chuck (20) and which preferably is arranged centrally in relation to the collet chuck (20).

4. A coupling according to Claim 2 or 3, **characterised in that** the eccentric shaft (76) with an eccentric crank pin (72) is formed as an eccentric element, on which is pivotably mounted a connecting-rod element (68) which is coupled to the collet chuck (20) and, preferably, acts via a transverse pin (66) on a reciprocating cup-shaped element (58).

5. A coupling according to Claim 4, **characterised in that** the cup-shaped element (58) acts via a compression spring (54), which for example comprises one or more disc springs (54), on a slide element (46) which is coupled in an axial direction to the collet chuck (20).

6. A coupling according to Claim 5, **characterised in that** the cup-shaped element (58) has an external screw-thread, on to which is screwed a compression nut (60) which acts via the compression spring (54) on the slide element (46,52) in the tightening direction.

7. A coupling according to Claim 5 or 6, **characterised in that** the cup-shaped element (58) has a drive shoulder (56) or peripheral projection which entrains the slide element (46) in a tension-releasing direction.

8. A coupling according to any one of Claims 2 to 7, **characterised in that** a stop member (82,84) is provided, which limits the angle of rotation of the eccentric shaft (76) after exceeding the dead centre.

9. A coupling according to any one of the preceding Claims, **characterised in that** the control device can be actuated manually, in particular by means of a crank which can be fitted on the eccentric shaft (76).

10. A coupling according to any one of the preceding Claims, **characterised in that** the collet chuck (20) is wedged in a self-locking manner in the clamping position.

## Revendications

1. Dispositif d'accouplement pour serrer un élément de préhension de pièces dans une installation de manutention (14), notamment des presses de transfert comprenant une pince (20) analogue à un tube, faisant partie de l'installation de manutention (14) et une pièce de raccordement (12) tubulaire, appartenant à l'élément de préhension de pièces et s'engageant dans la pince (20),
la pince (20) ayant au moins une fente longitudinale (24) et au moins une surface inclinée (30, 32) à sa périphérie, qui, à l'aide d'un dispositif d'actionnement (46, 58, 66, 68, 74, 76) agissant sur la pince (20) par un élément intermédiaire élastique (54), est mobile axialement contre au moins une surface inclinée antagoniste (38), associée dans un logement cylindrique (16) de l'installation de manutention (14), de façon que la pièce de raccordement (12) soit serrée dans la pince (20),
**caractérisé en ce que**
le dispositif d'actionnement (76, 74, 68, 66, 58, 46) est un mécanisme à point mort (74, 68, 66, 58) qui dépasse son point mort juste avant d'atteindre la position de fin de course du dispositif d'actionnement.

2. Dispositif d'accouplement selon la revendication 1,
**caractérisé en ce que**
le mécanisme à point mort est une structure à levier à genouillère ou arbre excentrique (76, 74) agissant sur la pince (20) par un élément intermédiaire (54) élastique.

3. Dispositif d'accouplement selon la revendication 2,
**caractérisé en ce que**
l'arbre excentrique (76, 74) a un axe de rotation perpendiculaire à la pince (20) et cet axe est de préférence situé au milieu de la pince (20).

4. Dispositif d'accouplement selon la revendication 2 ou 3,
**caractérisé en ce que**
l'arbre excentrique (76) comporte comme élément excentrique, un maneton de vilebrequin excentrique (72) sur lequel peut pivoter un élément en forme de bielle (68) couplé à la pince (20) et agissant de préférence par un axe transversal (66) sur un élément en forme de pot (58) à mouvement de va-et-vient.

5. Dispositif d'accouplement selon la revendication 4,
**caractérisé en ce que**
l'élément en forme de pot (58) est couplé par un ressort de compression (54) formé par exemple d'un ou plusieurs ressorts Belleville (54), sur un élément coulissant (46) couplé à la pince (20) dans la direction axiale.

6. Dispositif d'accouplement selon la revendication 5,
**caractérisé en ce que**
l'élément en forme de pot (58) a un filetage extérieur sur lequel est vissé un écrou de compression (60) agissant par l'intermédiaire du ressort de compression (54) dans la direction de serrage sur l'élément coulissant (46, 52).

7. Dispositif d'accouplement selon les revendications 5 ou 6,
**caractérisé en ce que**
l'élément en forme de pot (58) comporte un épaulement d'entraînement (56) ou un bord en saillie qui entraîne l'élément coulissant (46) dans une direction libérant la tension.

8. Dispositif d'accouplement selon l'une des revendications 2 à 7,
**caractérisé par**
une butée (82, 84) limitant l'angle de rotation de l'arbre excentrique (76) après le dépassement du point mort.

9. Dispositif d'accouplement selon l'une des revendications précédentes,
**caractérisé en ce que**
le dispositif d'actionnement est à commande manuelle, notamment à l'aide d'une manivelle engagée sur l'arbre excentrique (76).

10. Dispositif d'accouplement selon l'une des revendications précédentes,
**caractérisé en ce que**
la pince (20) est serrée de façon autobloquante en position de serrage.
